# EUROPÄISCHE PATENTSCHRIFT

(11) **EP 0 598 233 B1**
(45) Veröffentlichungstag und Bekanntmachung des Hinweises auf die Patenterteilung: **04.12.1996**
(21) Anmeldenummer: 93116922.1
(22) Anmeldetag: 20.10.1993
(51) Int. Cl.: B65D 90/34, F16K 15/06

(54) **Gas- oder Flüssigkeitsventil, insbesondere an einem Tankwagen, sowie ein Montageverfahren**
Gas or fluid valve especially for a tank waggon and mounting process
Soupape pour gaz ou fluides, notamment pour un wagon-citerne et procédé de montage

(30) Priorität: 19.11.1992 DE 4238972
(43) Veröffentlichungstag der Anmeldung: 25.05.1994
(73) Patentinhaber: F.A. SENING GMBH, D-22525 Hamburg (DE)
(72) Erfinder: Morgenstern, Erich, Dipl.-Ing., D-22089 Hamburg (DE)
(74) Vertreter: Meyer, Ludgerus A., Dipl.-Ing.

(56) Entgegenhaltungen:
- CH-A- 463 220
- DE-A- 3 042 477
- DE-A- 3 733 602
- DE-U- 9 112 498
- US-A- 2 856 958
- US-A- 4 437 492
- US-A- 4 535 808

## Beschreibung

Die Erfindung betrifft ein Gas- oder Flüssigkeitsventil, insbesondere an einem Tankwagen, mit einem Gehäuse, in dem ein auf seiner der Gas- oder Flüssigkeitsströmung zugewandten Vorderseite federbelasteter Ventilteller lösbar mit einem in einer vorderseitigen Querstrebe des Gehäuses geführten Stößel zur Betätigung des Ventils verbunden ist sowie ein Verfahren zur Montage eines derartigen Ventils.

Beim Befüllen von Tankwagen an Ladestationen wird aus dem zu füllenden Tank Gas gepreßt, das aus dem Tankwagen zur Raffinerie geleitet werden muß. Zu diesem Zweck ist an einer Seite des Tankwagens ein VRV (vapor recovery valve) als steuerbares Absperrorgan vorgesehen, durch das das Gas über einen Schlauch an die Raffinierie geleitet wird. Solche VRVs sind Tellerventile die schnelles Öffnen und Schließen erlauben und in deren kugelförmig ausgebildetem Gehäuse ein runder Ventilteller ausgebildet ist. Der Ventilkegel verschließt das Ventil von der Innenseite des Gehäuses her. Da die Öffnung des Ventils durch Druck auf einen Stößel von außen auf den Ventilteller übertragen wird, ist es erforderlich, eine feste Verbindung zwischen Stößel und Ventilteller vorzusehen. Daher sind die Gehäuse bekannter Ventile dieser Art zweiteilig ausgebildet, um die Montage des Ventils zu ermöglichen. Da Ventilteller und Stößel in der Regel eine Einheit bilden, können sie auch nur in der Gesamtheit eingesetzt bzw. ausgetauscht werden, wobei deren Halterung über eine Strebe im vom vorderen Ende des Ventils abgetrennten, hinteren Ventilteil erfolgt. Ein Auswechseln des Ventiltellers durch die Abgabeseite des Ventils ist unmöglich, da der Ventilsitz zu eng ausgebildet ist. Der mit dem Ventilteller einstückig ausgebildete Stößel ist ferner so lang, daß ein Einführen oder Entnehmen des Ventiltellers von der Zulaufseite des Gehäuses ebenfalls nicht möglich ist.

Aus der DE-OS 37 33 602 ist ein Gasventil mit einem Gehäuse bekannt, in dem ein federbelasteter Ventilteller durch einen in einer Querstrebe des Gehäuses geführten Stößel aus einer geschlossenen in eine geöffnete Stellung bringbar ist. Das Ventil weist eine ringförmige Halterung, jedoch keinen integrierten Ventilsitz auf. Der Ventilteller ist von der Rückseite her, d.h. von der Seite her, auf die sich keine Strömung richtet, in das Gehäuse einsetzbar. Im Gehäuse ist der Ventilteller mit dem Stößel verbindbar. Die Herstellung dieser Verbindung ist nicht näher beschrieben.

In der CH-A-463 220 ist ein federbelastetes Ventil beschrieben, das ein einteiliges Gehäuse mit einem auf seiner der Gas- oder Flüssigkeitsströmung zugewandten Vorderseite federbelasteten Ventilkörner zeigt. Zur Betätigung des Ventils ist ein Stößel vorgesehen. Zum Einsetzen des etwa halbkugelförmigen Ventilkörpers von der Flanschseite des Ventilgehäuses her ist ein Zusammendrücken des Dichtungskörpers erforderlich. Bei einem rein metallischen Ventilkörper ist eine derartige Montage des Ventils nicht möglich.

Es ist daher Aufgabe der vorliegenden Erfindung, ein Gas- oder Flüssigkeitsventil der gattungsmäßigen Art so zu verbessern, daß das Ventil für Tankwagen einsetzbar und preisgünstig herzustellen ist, wobei eine einfache Montage und ein Wechseln des Ventilkegels möglich sein soll.

Diese Aufgabe wird durch die in den Ansprüchen 1 und 4 angegebene Erfindung gelöst. Bevorzugte Weiterbildungen sind in den Unteransprüchen angegeben.

Gemäß der Erfindung ist vorgesehen, daß der Ventilteller eine äußere Form aufweist, die im wesentlichen der Form des Freiraums zwischen einer Umfangswand des Gehäuses und Querstrebe entspricht, so daß der Ventilteller von dem vorderseitigen Ende des Gehäuses in das Gehäuse einsetzbar und im Gehäuse mit dem Stößel verbindbar ist.

Im Anspruch 4 ist ein bevorzugtes Montageverfahren für eine Ausführungsform nach Anspruch 2 angegeben.

Die Erfindung ist vorzugsweise dadurch gekennzeichnet, daß der Ventilteller eine zentrale Bohrung aufweist, die parallel zur Ventilachse und zur Strömungsrichtung des Gases verläuft. Durch diese Bohrung ist der Stößel einführbar und mit dem Ventilteller verbindbar. Über den Stößel kann Druck auf den Ventilteller ausgeübt werden, der auf seiner der Strömungsrichtung zugewandten Vorderseite federbelastet mit seinem Ventilkegel in einem Ventilsitz sitzt, um den Ventilteller aus dem Ventilsitz zu drücken. Dadurch wird der Ventilauslaß geöffnet; das Gas, das aus den Tanks eines Tankwagens gedrückt wird, wenn dieser befüllt wird, kann durch das Ventil in einen Schlauch strömen, über den es zur Raffinerie geleitet wird. Nach Aufhebung des Drucks auf den Stößel wird der Ventilteller durch die Feder in den Ventilsitz zurückgedrückt und der Auslaß somit geschlossen.

Das Funktionsprinzip eines derartigen Ventils ist bekannt, jedoch sind Ventilteller und der vordere Bereich des Stößels bisher einstückig ausgebildet gewesen. Dies hat dazu geführt, daß das Gehäuse zweiteilig ausgeführt wurde, um eine Montage des Ventils zu ermöglichen. Durch die erfindungsgemäße zweiteilige Ausführung von Ventilteller und Stößel ist ein zweites Gehäuseteil unnötig. Zum Einsetzen des Ventiltellers durch das zuflußseitige Ventilende wird allein der Ventilteller, der besonders schmal ausgebildet ist, zwischen Querstrebe und vorderseitiger Umfangswand des Gehäuses geschoben, und dann um 90° in seine Verschlußposition gekippt. Danach wird der Stößel durch die zentrale Bohrung des Tellers geschoben und befestigt.

Die Befestigung des Stößels am Ventilteller erfolgt vorzugsweise durch eine Kugel, die in einer axialen Bohrung liegt, die durch den Stößel führt. Die Kugel wird durch einen vorn spitz zulaufenden Stift in eine Querbohrung in dem Stößel und dann in eine umlaufende Nut des Ventiltellers geschoben, wodurch sie den Ventilteller am Stößel arretiert. Der Stift, der sich in der axialen Bohrung des Stößels befindet, wird vorzugsweise durch eine Gewindeschraube in seiner arretierenden Postition festgehalten. Die Gewindeschraube ist vom ablaufseitigen Ende des Ventils leicht zugänglich. Vorteilhaft kann daher ein Ventilstößel gewählt werden, der als Halbzeug keine Ausbildung von Absätzen erfordert und daher kostengünstig herstellbar ist. Dadurch ist er sowohl von der Ablauf- als auch von der Befüllseite her in das Ventil einsetzbar.

An einer Seite des Gehäuses ist vorzugsweise ein zusätzlicher Produktablauf vorgesehen, der bei Bedarf mechanisch geöffnet werden kann. Durch diesen Ablauf kann angesammelte Flüssigkeit abgelassen werden.

Die Dichtfläche des Tellerventils weist vorzugsweise O-Ringe zur zusätzlichen Dichtung auf.

Der Ventilteller kann insbesondere ein Aluminiumgußteil sein, während die Feder und der Stößel aus nichtrostendem Stahl bestehen sollten.

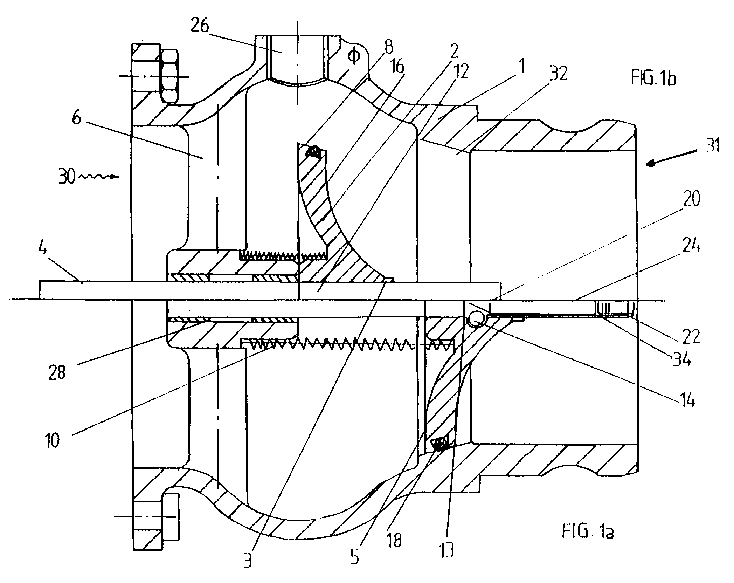

Eine bevorzugte Ausführungsform der vorliegenden Erfindung wird nachstehend anhand der Figur näher erläutert, wobei die Figur
einen Längsschnitt durch das Ventil in geschlossener und in geöffneter Stellung darstellt.

Die Figur zeigt einen Längsschnitt eines Gas- oder Flüssigkeitsventils und zwar in der oberen Hälfte in geöffneter und in der unteren Hälfte in geschlossener Stellung. Ein solches Gas- oder Flüssigkeitsventil ist insbesondere seitlich am Tankwagen als steuerbares Absperrorgan angeordnet. Von allen Tanks des Tankwagens führen Leitungen, die in eine Sammelleitung münden, zu diesem Ventil. Es dient als sogenannte "Vapor recovery valve" (VRV), d.h. das Gas, das beim Befüllen der Tanks entweicht, wird über dieses Ventil an die Raffinerie abgeleitet. Zu diesem Zweck wird an der Abgabeseite 31 des Ventils eine Gasrückführleitung angeschlossen, über die das Gas an die Raffinerie gelangt.

Solange der Tankwagen nicht befüllt wird, befindet sich das Ventil in seinem geschlossenen, ersten Schaltzustand. Es weist ein im wesentlichen kugelig ausgebildetes Gehäuse 1 aus Aluminiumguß auf, das in Strömungsrichtung vorzugsweise leicht gestreckt ist. Das Gehäuse 1 wird im wesentlichen durch acht Schrauben, die am befüllseitigen Ende 30 angeordnet sind, am Tankwagen befestigt. An demselben Ende ist etwas zurückspringend eine Querstrebe 6 geformt, die sich quer durch den Ventilinnenraum erstreckt und in deren Mitte sich die Führungsbuchse 28 für den axialen Stößel 4 befindet. Die Strebe 6 dient als Halterung für den Stößel 4. Die Führungsbuchse 28 erstreckt sich axial in Richtung der Ventilachse.

Das Gehäuse 1 verjüngt sich in Richtung der Abgabeseite 31 und bildet dort den kegeligen Ventilsitz 32. Mit dem Ventilsitz 32 schließt der Ventilkegel 8 bündig ab und verschließt somit die Abgabeseite 31. Um den Verschluß zusätzlich abzudichten, sind vorzugsweise O-Ringe 18 als Dichtungen vorgesehen, die in einer umlaufenden Nut 14 im Ventilteller 2 angeordnet sind. Der Ventilkegel 8 geht in den Ventilteller 2 über, der im wesentlichen rund und erfindungsgemäß besonders flach ausgebildet ist. In einer bevorzugten Ausführungsform sind Ventilkegel 8 und Ventilteller 2 als Aluminiumgußteil geformt.

Der Ventilteller 2 weist eine zentrale axial gerichtete Bohrung 12 auf, durch die der Stößel 4 geführt ist. Der Stößel 4 sitzt paßgenau in der Bohrung 12, besteht vorzugsweise aus nichtrostendem Stahl und hat eine Länge, die in etwa der Länge des Ventils entspricht. Er ist lösbar mit dem Ventilteller 2 verbunden.

Im geschlossenen Zustand wird der Ventilteller 2 durch eine Feder 10, die vorzugsweise ebenfalls aus nichtrostendem Stahl besteht, in den Ventilsitz 32 gedrückt. Die Feder 10 setzt an der Führung 28 für den Stößel 4 an und endet an dem der Befüllseite 30 zugewandten Ende des Ventiltellers.

Zum Einsetzen des Ventiltellers 2 in das einteilige Ventilgehäuse 1 wird der besonders flach ausgebildete Ventilteller 2 vom vorderseitigen, d.h. befüllseitigen Ende 30 des Ventils an der Strebe 6 vorbei ins Gehäuseinnere eingeführt. Dafür wird der Ventilteller 2 um 90° in Bezug auf seine Endstellung gekippt, so daß die später der Abgabeseite 31 zugewandte Vorderseite 3 des Tellers während der Einführung zur Außenseite des Gehäuses 1 weist, während die später strömungszugewandte Unterseite 5 des Ventiltellers zur Strebe 6 hinweist. Da an der Ventiltellervorderseite 3 kein Stößelteil angeformt ist, ist die Gesamtheit von Ventilteller 2 und -kegel 8 flach genug, um eingeführt werden zu können.

Im Gehäuseinneren wird der Ventilteller 2 um 90° in seine Endstellung gekippt. Dann wird die Feder 10 zwischen Ventilteller und Querstrebe eingesetzt. Anschließend wird der Stößel 4 durch die zentrale Bohrung 12 des Ventiltellers 2 und durch die Führung 28 der Strebe 6 ins Gehäuseinnere geführt. Die Befestigung des Stößels 4 am Ventilteller erfolgt von der Abgabeseite 31 des Ventils her.

Um das Gas- oder Flüssigkeitsventil in seinen geöffneten, zweiten Schaltzustand zu schalten, wird auf den Stößel 4, der ein Stück über den Ventilteller 2 herausragt, mechanisch Druck ausgeübt. Dies kann insbesondere durch das Aufsetzen einer Schlauchkupplung auf die Abgabeseite 31 erfolgen, wobei die Schlauchkupplung einen zentralen Vorsprung aufweist, der den federbelasteten Stößel 4 zur Öffnung verschiebt.

In einer bevorzugten Ausführungsform erfolgt die Befestigung des Ventiltellers 2 am Stößel 4 durch eine Kugel 20, die von einem Stift 24 in eine im Ventilteller 2 umlaufend angeordnete Nut 14 oder eine einzelne Ausnehmung gedrückt wird. Der Stift 24 liegt in einer axialen Bohrung 34 des Stößels 4 und weist an seinem kugelseitigen Ende eine Spitze auf.

Das kegelige Vorderende des Stiftes kann bei Vorschub in der Bohrung 34 eine in einer seitlichen Bohrung 13 des Stößels 4 liegende Kugel aus dem Stößel herausdrücken und in die Nut 14 vorschieben. Wenn die Kugel sich teilweise in der Nut 14 und teilweise im Stößel 4 befindet, ist keine axiale Verschiebung des Ventiltellers gegenüber dem Stößel möglich. Der Vorschub des Stiftes erfolgt über eine Madenschraube 22, die von der Abgabeseite des Ventils erreichbar ist.

Um den Strömungswiderstand des durch das Ventil fließenden Gases zu vermindern, können in einer bevorzugten Ausführungsform beide Seiten des Ventiltellers 2 leicht nach innen gewölbt sein.

An einer Seite des Gas- oder Flüssigkeitsventils, insbesondere in seinem verdickten Mittelbereich, ist eine Produktablaufbohrung 26 vorgesehen. Diese kann geöffnet werden, wenn sich Restflüssigkeit im Ventil gesammelt hat.

### Bezugszeichenliste

- 1: Gehäuse
- 2: Ventilteller
- 3: Ventiltellerspitze
- 4: Stößel
- 5: Ventiltellerboden
- 6: Querstrebe
- 8: Ventilkegel
- 10: Feder
- 12: Bohrung
- 13: Querbohrung
- 14: umlaufende Nut
- 16: Wölbung
- 18: O-Ring
- 20: Kugel
- 22: Schraube
- 24: Stift
- 26: Ablaufbohrung
- 28: Führungsbuchse
- 30: Befüllseite
- 31: Abgabeseite
- 32: Ventilsitz
- 34: Axialbohrung
- 36: Anschlag

## Patentansprüche

1. Gas- oder Flüssigkeitsventil, insbesondere an einem Tankwagen, mit einem Gehäuse (1), in dem ein auf seiner der Gas- oder Flüssigkeitsströmung zugewandten Vorderseite federbelasteter Ventilteller (2) lösbar mit einem in einer vorderseitigen Querstrebe (6) des Gehäuses geführten Stößel (4) zur Betätigung des Ventils verbunden ist, dadurch gekennzeichnet, daß der Ventilteller eine äußere Form aufweist, die im wesentlichen der Form des Freiraums zwischen innerer Umfangswand des Gehäuses und Querstrebe entspricht, so daß der Ventilteller von dem vorderseitigen Ende des Gehäuses in das Gehäuse einsetzbar und im Gehäuse mit dem Stößel verbindbar ist.

2. Ventil nach Anspruch 1, dadurch gekennzeichnet, daß die Befestigung des Ventiltellers (2) an dem Stößel (4) durch eine Kugel (20) erfolgt, die von einem in einer axialen Bohrung des Stößels vorschiebbaren Stift mit kegeligem Vorderende durch eine seitliche Öffnung des Stößels in eine Ausnehmung des Ventiltellers eingedrückt wird, wobei der Stift (24) durch eine stirnseitige Schraube (22) in der Bohrung (34) verschiebbar ist.

3. Ventil nach Anspruch 1 oder 2, dadurch gekennzeichnet, daß der Ventilteller (2) ein Aluminiumgußteil ist und daß die Feder (10) und der Stößel (4) aus nichtrostendem Stahl ausgebildet ist.

4. Verfahren zur Montage eines Ventiltellers nach Anspruch 2, dadurch gekennzeichnet, daß der Ventilteller von der der Gas- oder Flüssigkeitsströmung zugewandten Vorderseite des Ventils her zwischen einer Querstrebe und inneren Umfangswand des Gehäuses und anschließendem Kippen um 90° in seinen Ventilsitz eingeführt wird, daß eine Druckfeder zentral zwischen Ventilteller und Querstrebe angeordnet wird, daß ein Stößel von der der Strömung abgewandten Rückseite des Ventils durch eine zentrale Bohrung des Ventiltellers bis in die Querstrebe geführt wird und daß ein Stift in ein zentrales Loch des Stößels eingeschoben und mittels stirnseitiger Schrauben soweit vorgeschoben wird, bis das kegelige Vorderende des Stiftes eine Klemmkugel durch die Seitenwand des Stößels in eine Aussparung des Ventiltellers eingedrückt hat.

## Claims

1. Gas or liquid valve, especially on a tanker, with a housing (1), in which a valve disc (2) spring-loaded on its front side facing the gas or liquid flow is connected releasibly to a tappet (4), guided in a front transverse strut (6) of the housing, for the actuation of the valve, characterized in that the valve disc has an external shape which corresponds essentially to the shape of the free space between the inner circumferential wall of the housing and the transverse strut, so that the valve disc can be inserted into the housing from the front end of the housing and can be connected to the tappet in the housing.

2. Valve according to Claim 1, characterized in that the fastening of the valve disc (2) to the tappit (4) is carried out by means of a ball (20) which is pressed through a lateral orifice of the tappet into a recess of the valve disc by a pin having a conical front end and capable of being pushed forwards in an axial bore of the tappet, the pin (24) being displaceable in the bore (34) by means of a screw (22) located on the end face.

3. Valve according to Claim 1 or 2, characterized in that the valve disc (2) is an aluminium casting, and in that the spring (10) and the tappet (4) are made from stainless steel.

4. Method for mounting a valve disc according to Claim 2, characterized in that the valve disc is introduced into its valve seat from the front side of the valve facing the gas or liquid flow, between a transverse strut and the inner circumferential wall of the housing, and with subsequent tilting through 90°, in that the compression spring is arranged centrally between the valve disc and transverse strut, in that a tappet is guided through a central bore of the valve disc into the transverse strut from the rear side of the valve facing away from the flow, and in that a pin is pushed into a central hole of the tappet and is pushed forwards by means of screws located on the end face, until the conical front end of the pin has pressed a clamping ball through the side wall of the tappet into a recess of the valve disc.

## Revendications

1. Soupape pour gaz ou liquides, en particulier sur un véhicule citerne, comportant une enveloppe (1) dans laquelle une tête de soupape (2) commandée par ressort, sur son côté avant tourné vers l'écoulement de gaz ou de liquide, est reliée de façon amovible à un poussoir (4) guidé dans un support transversal avant (6) de l'enveloppe et destiné à actionner la soupape, caractérisée en ce que la tête de soupape présente une forme extérieure qui correspond globalement à la forme de l'espace libre défini entre la paroi périphérique intérieure de l'enveloppe et le support transversal, de sorte que la tête de soupape est apte à être mise en place dans l'enveloppe par l'extrémité avant de l'enveloppe et est apte à être reliée au poussoir dans celle-ci.

2. Soupape selon la revendication 1, caractérisée en ce que la fixation de la tête de soupape (2) au poussoir (4) se fait à l'aide d'une bille (20) qui est enfoncée dans une cavité de la tête de soupape, à travers une ouverture latérale du poussoir, par une tige apte à être poussée dans un perçage axial du poussoir et pourvue d'une extrémité avant conique, la tige (24) étant apte à être déplacée dans le perçage (34) grâce à une vis (22) prévue côté frontal.

3. Soupape selon la revendication 1 ou 2, caractérisée en ce que la tête de soupape (2) est une pièce en fonte d'aluminium et en ce que le ressort (10) et le poussoir (4) sont en acier inoxydable.

4. Procédé pour le montage d'une tête de soupape selon la revendication 2, caractérisé en ce qu'on introduit la tête de soupape entre un support transversal et la paroi périphérique intérieure de l'enveloppe par le côté avant de la soupape tourné vers l'écoulement de gaz ou de liquide puis on la fait basculer de 90° pour l'amener dans son siège de soupape, en ce qu'on dispose un ressort de compression au centre, entre la tête de soupape et le support transversal, en ce qu'on amène un poussoir dans un perçage central de la tête de soupape jusque dans le support transversal, par le côté arrière de la soupape opposé à l'écoulement, et en ce qu'on introduit une tige dans un trou central du poussoir et on la pousse à l'aide de vis prévues côté frontal jusqu'à ce que l'extrémité avant conique de la tige ait enfoncé une bille de blocage dans une cavité de la tête de soupape, par la paroi latérale du poussoir.
